# EUROPEAN PATENT APPLICATION

(11) **EP 1 988 342 A1**
(43) Date of publication of application: **05.11.2008**
(21) Application number: 06834122.1
(22) Date of filing: 06.12.2006
(51) Int. Cl.: F24F 13/28, F24F 1/00, B01D 46/10

(54) **AIR CONDITIONER**

(30) Priority: 06.12.2005 JP 2005352293
(71) Applicant: Toshiba Carrier Corporation, Tokyo 108-8580 (JP)
(72) Inventor: OZAWA, Tetsuro, (JP); SUZUKI, Hideto, (JP); SANO, Mitsukuni, (JP); MISHIMA, Takechika, (JP); OKADA, Kaku, (JP)
(74) Representative: Grosse, Rainer
(86) International application number: PCT/JP2006/324367
(87) International publication number: WO 2007/066691

(57) **Abstract**

An air conditioner according to the invention is provided with means for automatically removing dust from an air filter which captures dust from air sucked from a suction port, the air conditioner including a dust box (32) including a rotary brush (30) for removing dust from the air filter, a dust receiving passage (31) which is provided adjacent to the rotary brush so as to collect dust, and an opening portion (33) which exposes the rotary brush to a moving portion of the air filter, a sealing member (34) which seals the opening portion after a dust removing operation is ended, and a ventilation unit (11) for discharging the dust collected in the dust receiving passage outdoors, without enlargement of an indoor unit main body, thereby reducing the dust removing time.

## Description

### Technical Field

The present invention relates to an air conditioner provided with means for automatically removing, from an air filter, dust captured from indoor air by the air filter.

### Background Art

In an air conditioner, indoor air is sucked into the main body through an air intake port and dust contained in the indoor air is captured by the air filter provided opposing the air intake port, and only the indoor air is introduced to a heat exchanger in which heat exchange is carried out. As the air conditioner is operated continuously, dust captured by the air filter is deposited and if left for a long time as it is, circulation of the indoor air to the heat exchanger is blocked, thereby inducing a reduction in heat exchange efficiency.

To improve the heat exchange efficiency, it is ideally necessary to remove dust attached to the air filter regularly. If the attachment/removal operation of the filter is troublesome and the air conditioner is located at a high position, the attachment/removal is difficult, so that the air filter is often left as-is with dust attached thereto.

Due to this reason, an air conditioner provided with means for automatically removing dust attached to the air filter has been proposed, as disclosed in, for example, Jpn. Pat. Appln. KOKAI Publication No. 2004-044933. More specifically, the air filter is disposed on a section from the front face of a casing up to the top face with respect to an inverted V-shaped heat exchanger accommodated in the casing. Moving means for moving the air filter to the front face of the casing and the rear face thereof, and a dust removing portion for scraping dust as the air filter moves, are provided in the vicinity of the apex of the heat exchanger.

### Disclosure of Invention

According to the technique disclosed in the aforementioned Jpn. Pat. Appln. KOKAI Publication No. 2004-044933, the air filter can be cleaned without extracting the air filter out of the casing. However, dust scraped from the air filter is stored in a dust storage portion in the casing and thus, to extract dust stored in the dust storage portion in the casing, the user needs to stretch his or her hand to such a high position, which is troublesome. Further, since the dust may not remain in-situ when the dust storage portion is extracted out of the casing, dust may be scattered around or fall out.

An object of the present invention is to provide means for automatically removing dust from an air filter so as to reduce the necessary time and labor, the means being capable of discharging the removed dust outside by means of an efficient suction/exhaust unit that reduces the time needed to remove the dust.

In order to achieve the object, an air conditioner of the invention provided with an air filter which captures dust from air sucked from a suction port, comprising: a moving mechanism which moves the air filter; a dust box including a dust removing mechanism which makes contact with the moving air filter so as to remove dust adhering to the air filter, a dust receiving portion which is provided adjacent to the dust removing mechanism so as to collect the removed dust, and an opening portion which exposes the dust removing mechanism to a moving portion of the air filter; a sealing member which closes the opening portion of the dust box after a dust removing operation on the air filter is ended; and a suction/exhaust unit which is connected to the dust receiving portion of the dust box so as to discharge dust collected in the dust receiving portion.

### Brief Description of Drawings

FIG. 1 is a schematic longitudinal sectional view of an indoor unit of an air conditioner according to an embodiment of the present invention.
FIG. 2 is a front view of the indoor unit from which a front face panel is removed, according to the embodiment.
FIG. 3 is a perspective view of a frame assembly according to the embodiment.
FIG. 4 is a sectional view of the frame assembly according to the embodiment.
FIG. 5 is a perspective view of an air filter cleaning unit and its neighborhood according to the embodiment.
FIG. 6 is a longitudinal sectional view of the same portion as FIG. 5 according to the same embodiment.
FIG. 7 is a perspective view of an interior of a box case according to the embodiment.
FIG. 8 is a perspective view of the interior of the dust box according to the embodiment.
FIG. 9A is a perspective view showing the connecting structure of a rotary brush according to the embodiment.
FIG. 9B is a perspective view of a dust box side portion according to the embodiment.
FIG. 10A is a perspective view of one side portion of the dust box built into the indoor unit main body according to the embodiment.
FIG. 10B is a perspective view of the other side portion of the dust box built into the frame assembly according to the embodiment.
FIG. 11 is a perspective view with part of a drive portion omitted according to the embodiment.
FIG. 12 is a perspective view of a gear train constituting the gear assembly according to the embodiment.
FIG. 13 is a perspective view of part of the gear train and a lift mechanism according to the embodiment.
FIG. 14 is a perspective view of part of the air filter cleaning unit and a ventilation unit according to the embodiment.
FIG. 15 is a perspective view of part of interior of the ventilation unit according to the embodiment.
FIG. 16 is a perspective view with the cover of the ventilation unit removed according to the embodiment.
FIG. 17A is an explanatory diagram showing an operation of the gear train according to the embodiment.
FIG. 17B is an explanatory diagram showing an operation of the gear train according to the embodiment.
FIG. 17C is an explanatory diagram showing the operation of the gear train according to the embodiment.

### Best Mode for Carrying Out the Invention

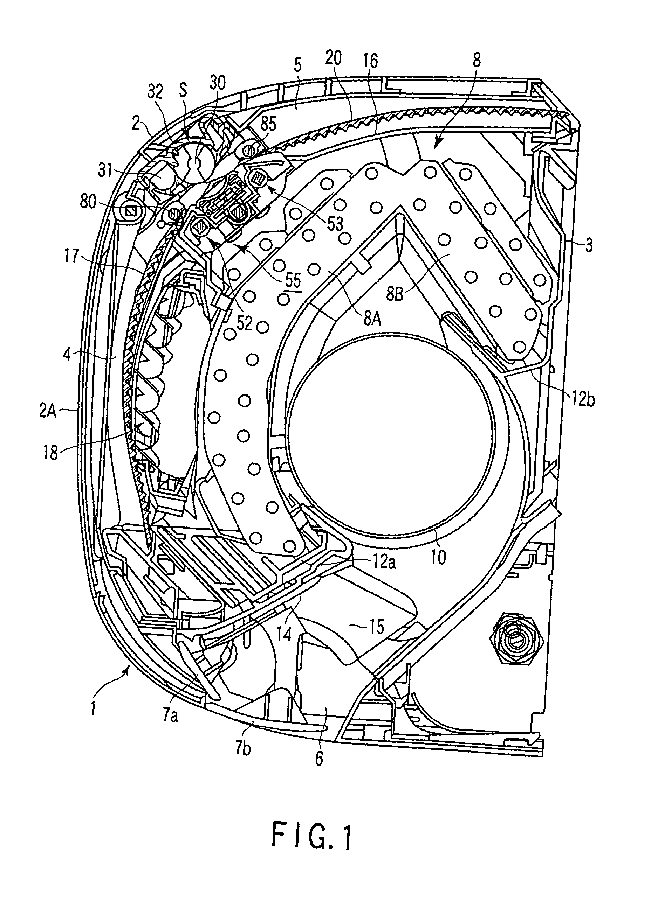

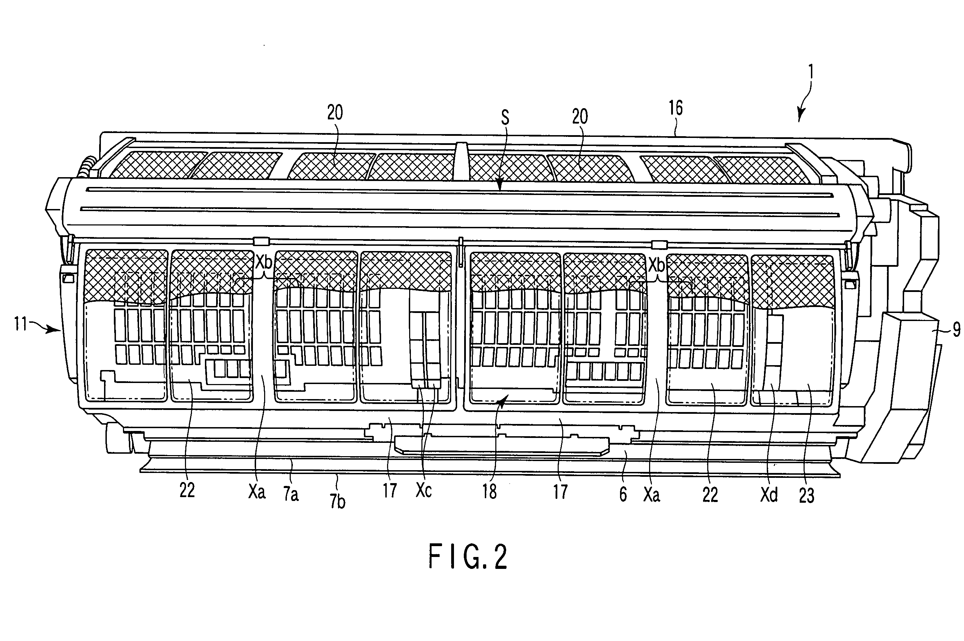

Hereinafter, embodiments of the present invention will be described in detail with reference to the accompanying drawings. FIG. 1 is a schematic side sectional view of an indoor unit of an air conditioner and FIG. 2 is a front view of an indoor unit main body 1 with a front face panel 2 removed. Note that components without reference numerals in the description are not shown in the drawings.

The indoor unit main body 1 includes the front face panel 2 constituting the front side casing of the indoor unit main body 1 and a rear plate casing 3, and is elongate in the width direction with respect to a vertical direction. A front face suction port 4 is open in part of the front face side of the indoor unit main body 1 and a movable panel 2A supported by an opening/closing drive mechanism is fitted to the front face panel 2 opposing the front face suction port 4.

When the operation of the air conditioner is stopped, the movable panel 2A is joined to the surface of the front face panel 2 so that they are flush with each other so as to close the front face suction port 4. Upon the operation, the movable panel 2A is projected forward so as to generate a gap communicating with the room and the front face suction port 4 is controlled to be opened to the interior of the room. A top face suction port 5 is provided on the top of the indoor unit main body 1. A frame-like sash is fitted to the top face suction port 5 so that the top face suction port 5 is partitioned into plural space portions by the sash.

A blow-out port 6 is opened in the bottom of the front face of the indoor unit main body 1 and two blow-out louvers 7a, 7b are provided in parallel on this blow-out port 6. The respective louvers 7a, 7b open/close the blow-out port 6 by a rotation posture and further, a blow-out direction of heat-exchanged air can be set up depending on the operating condition.

A heat exchanger 8, formed into a substantially inverted V shape of a front side heat exchanging portion 8A and a rear side heat exchanging portion 8B, is disposed in the indoor unit main body 1 and an electric component box 9 is provided on a side portion of this heat exchanger 8. The front side heat exchanging portion 8A is formed curved substantially in parallel with the front face panel 2 with a gap therebetween so as to oppose the front face suction port 4 and the top face suction port 5. The rear side heat exchanging portion 8B is formed straight and opposes the top face suction port 5 such that the rear side heat exchanging portion 8B is inclined with respect to the port.

A blower 10 is disposed between the front and rear side heat exchanging portions 8A, 8b of the heat exchanger 8. The blower 10 is constituted of a fan motor disposed in a space at an end of the indoor unit main body 1 and a lateral flow fan supporting shaft which is connected mechanically to a rotation shaft of the fan motor. A suction/discharge unit (hereinafter referred to as ventilation unit) 11 shown in FIG. 2 and described later is provided in a space on the other side end of the indoor unit main body 1 adjacent to a bearing portion for supporting the front end portion of the lateral flow fan.

The bottom end portion of the front side heat exchanging portion 8A is mounted on a front drain pan 12a and the rear side heat exchanging portion 8B is mounted on a rear drain pan 12b. The front/rear drain pans 12a, 12b receive drain water dropped from the heat exchanging portions 8A, 8B and can discharge the water via a drain hose (not shown).

The outside faces of the side walls which are part of the front/rear drain pans 12a, 12b are provided in the vicinity of the blower 10, constituting a nose to the lateral flow fan of the blower 10. The side wall portions of the front/rear drain pans 12a, 12b which constitute the nose and respective side portions of the blow-out port 6 are connected with partition members 14. The space enclosed by the partition members 14 serves as a blow-out air passage 15 which connects the nose with the blow-out port 9.

There is a frame assembly 16 between the front face panel 2 and the front face side to the top side of the heat exchanger 8, and the frame assembly is mounted on the front face panel 2 via a mounting device. Front air filters 17, 17 which are divided into two sections, right and left, disposed on the front face of the frame body, and an air purifying unit 18 which is a secondary air filter disposed inside the frame body, are installed on the front face portion of the frame assembly 16 such that they are arranged in the back and forth direction.

Upper air filters 20, 20, which are divided into two sections, right and left, are installed on the top face of the frame assembly 16. An air filter cleaning unit S is installed between the top end of the front air filter 17 and the front end of the upper air filter 20.

For further explanation, the front air filter 17 and the air purifying unit 18 are interposed between the front face suction port 4 and the front side heat exchanging portion 8A constituting the heat exchanger 8. The upper air filter 20 is disposed between the top face suction port 5 and part of the front side heat exchanging portion 8A/the rear side heat exchanging portion 8B. Thus, the air filter cleaning unit S is disposed opposing a portion between the front face suction port 4 and the top face suction port 5.

The air filter cleaning unit S is formed to have the same length in the width direction as the length in the width direction of the front air filter 17 and the upper air filter 20 and has a certain thickness. The air filter cleaning unit S is disposed within a corner portion in which the front face portion and the top face portion of the front face panel 2 intersect, which is a dead space formed between the front face panel 2 and the heat exchanger 8.

Thus, the frame assembly 16 in which the front air filter 17, the air purifying unit 18, the upper air filter 20 and the air filter cleaning unit S are installed, can be mounted as-is onto the front panel of the indoor unit main body having the conventional configuration. In other words, by mounting the frame assembly 16 onto an existing indoor unit main body, the air conditioner having an air filter automatic cleaning function described later can be configured so as to enable common use of the indoor unit main body 1.

Although the air filter provided on the existing indoor unit main body 1 is composed of a single sheet so as to oppose the top face suction port 5 as well as the front face suction port 4, the air filter is divided into the front air filter 17 and the upper air filter 20 according to the present invention. Further, the front air filter 17 and the upper air filter 20 are divided into two sections, right and left, across an intermediate portion in the width direction of the heat exchanger 8, thereby four air filters are equipped.

The respective divided air filters 17, 20 are so formed that the width dimensions of upper/lower side portions running in the width direction of the main body of their surrounding frames and a central reinforced sash Xa provided in a direction perpendicular to the width direction in the center of the width direction are large while the width dimensions of other surrounding frames and reinforced sashes are small. A mesh portion Xb of a predetermined pattern is provided in an opening portion formed between these frames.

The air purifying unit 18 is constituted of a pair of electric dust collectors 22, 22, right and left, arranged in parallel, and a dust collector power supply 23 disposed on one side (right side in FIG. 2) of the electric dust collector 22. Each electric dust collector 22 is designed to have the same size and shape and includes a charging side electrode for applying a charge to dust in the circulating air and a dust collector side electrode for capturing the charged dust. The surface of each electrode is coated with a deodorant for adsorbing odor components contained in the air so as to possess a deodorization function as well as dust collecting function as the electric dust collector.

The electric dust collector 22 is mounted detachably to an air purifying unit storage portion 16a of the frame assembly 16 and the dust collector power supply 23 is fixed to the air purifying unit storage portion 16a of the frame assembly 16 and connected electrically to an electric component in the electric component box 9. A terminal portion Xc is projected from each of right and left side portions of each electric dust collector 22 and, when each electric dust collector is mounted on the air purifying unit storage portion 16a of the frame assembly 16, the terminal portions Xc engage each other so as to attain electric connection, thereby functioning as an electric dust collector.

The dust collector power supply 23 includes a connecting portion Xd for connecting electrically with the terminal portion Xc of the electric dust collector 22 on the side portion thereof. The electric dust collector 22 may be installed on the left or right and, when the electric dust collector 22 is installed on the frame assembly 16, the electric dust collector 22 and the dust collector power supply 23 are connected to each other electrically.

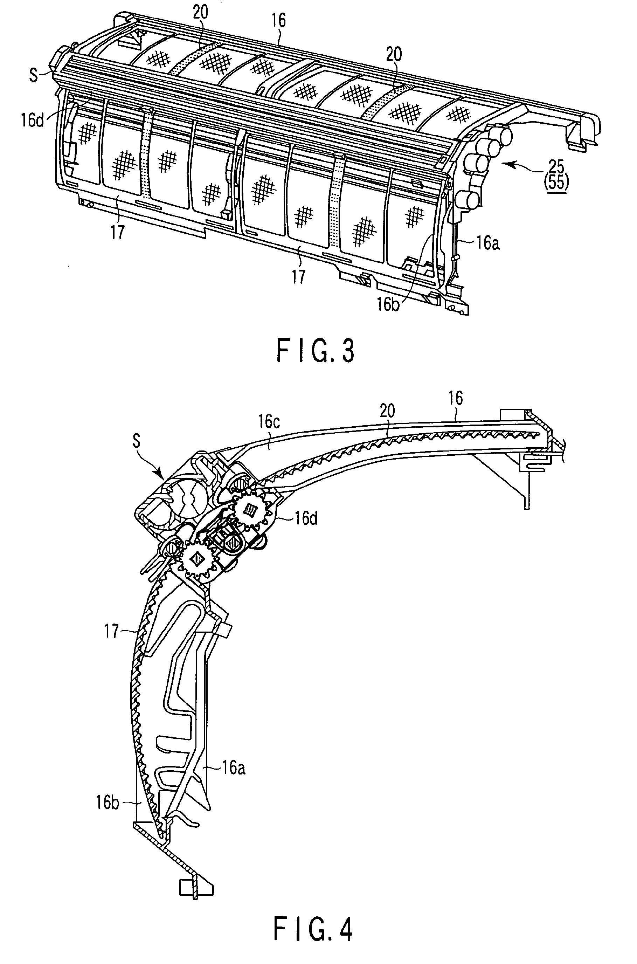

FIG. 3 is a perspective view of the frame assembly 16 and FIG. 4 is a sectional view of the frame assembly 16. Although FIG. 3 shows the front air filter 17, the upper air filter 20, and the air filter cleaning unit S, representation of the air purifying unit 18 is omitted. FIG. 4 shows schematic sections of the front air filter 17, the upper air filter 20, the air filter cleaning unit S and the air purifying unit storage portion 16a.

The frame assembly 16 is formed corresponding to the shape of the outer frame of the front face panel 2 and constituted of right/left vertical side portions, a central portion stretched between these both side portions, a front face bottom and a rear face portion lateral frame.

Part or all of the front face bottom and the rear face portion lateral frame may be omitted while only the central lateral frame is left, and the rear face portions of both side portions and the front face bottom portion may be fixed to the rear plate casing 3 of the indoor unit main body 1. In short, any frame may be used as long as such frame has vertical frames on both right and left sides and a central lateral frame stretched between both of these side portions.

Only the rear face portion of the frame body has an entire length opposing the entire length in the width direction of the indoor unit main body 1 and the frame bodies of the central portion and front face bottom portion except this rear face portion are formed corresponding to a dimension in the width direction of the heat exchanger 8, so as to oppose the heat exchanger 8. The shape as viewed from the side is formed corresponding to the sectional shape of the front face panel 2. A section between these frame bodies serves as an opening portion opposing the front face suction port 4 and the top face suction port 5.

The opening portion on the front face side of the frame assembly 16 configures the air purifying unit storage portion 16a on which the air purifying unit 18 is to be mounted inside of the frame body and the dividable front air filter 17 is mounted on the frame body front face, and a front face side air filter storage portion 16b having a space which allows the upper air filter 20 to be extended to the front face side of the front air filter 17 is provided.

The opening portion on the top face side of the frame assembly 16 has a second air filter storage portion 16c which allows the dividable upper air filter 20 to be mounted within the frame body and the front air filter 17 to be extended to the top face side of the upper air filter 20. The frame bodies of the right/left side portions and the central partition portion of the air filter storage portion 16c on the top face side serve as a guide portion for supporting the respective air filters 17, 20 movably.

As described later, in a normal state in which no dust removing operation is carried out to the front air filter 17, the top end of the front air filter 17 is inserted into and supported by the air filter cleaning unit S. Likewise, in the normal state (non-dust-removing operating state) of the upper air filter 20, the front end of the upper air filter 20 is inserted into and supported by the air filter cleaning unit S.

When the front panel 2 of the indoor unit main body 1 is opened, the front, upper air filters 17, 20 are easily attachable to/detachable from the front/top face air filter storage portions. Further, a pair of electric dust collectors 22 constituting the air purifying unit 18 is easily attachable to/detachable from the air cleaning unit storage portion 16a.

The air filter cleaning unit S is so constructed to be attachable to/detachable from an air filter cleaning unit mounting portion 16d provided between the front face side air filter storage portion 16b of the frame assembly 16 and the top face side air filter storage portion 16c except part thereof (sealing member 34 described later).

The air purifying unit storage portion 16a equipped with the air cleaning unit 18 is constructed on the front face side of the frame assembly 16 and the front face side air filter storage portion 16b equipped with the front air filter 17 is constructed on the front face of the air purifying unit 18. Consequently, the necessity of mounting the air purifying unit by providing the front face of the heat exchanger with a separate mounting frame, as in the conventional art, is eliminated, thereby improving manufacturing efficiency of the air conditioner.

As shown in FIG. 3, a driving portion 25 provided with a driving source and a driving mechanism for driving the air filter cleaning unit S and an air filter moving mechanism (air filter moving means) 55 described later is mounted at a portion opposing the air filter cleaning unit S on a side portion of the frame assembly 16. The electric component box 9 is disposed to the side of the driving portion 25.

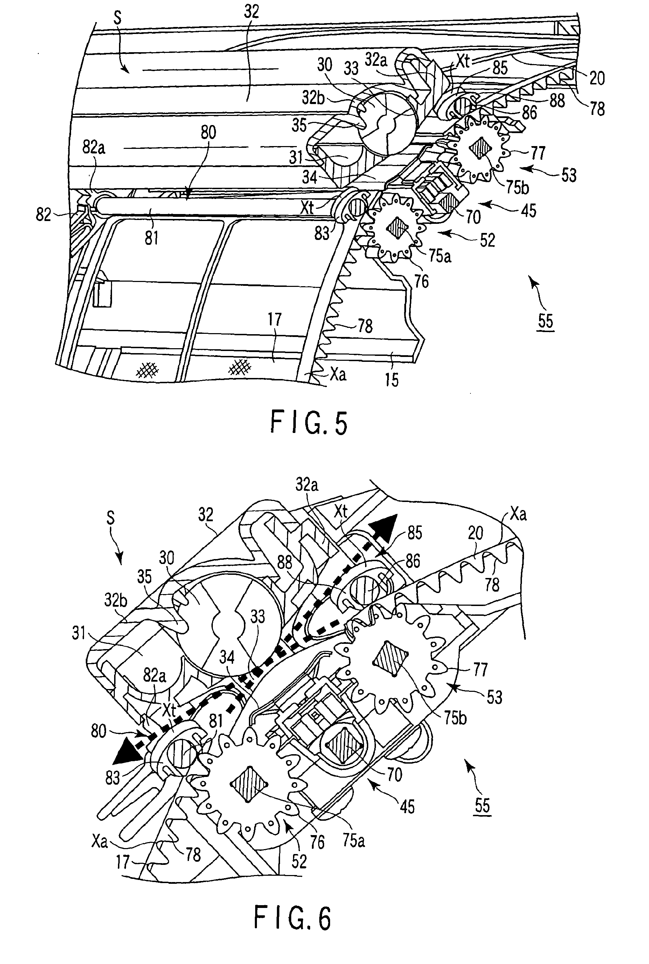

FIG. 5 is a perspective view of the air filter cleaning unit S and sectional views thereof, and FIG. 6 is a longitudinal sectional view of the same portion as FIG. 5.

The air filter cleaning unit S includes a rotary brush (dust removing mechanism) 30 for removing dust attached to the front air filter 17 and the upper air filter 20 as described later, a dust box 32 which accommodates this rotary brush 30 and contains a dust receiving passage (dust receiving portion) 31 for collecting dust removed by the rotary brush 30, and a sealing member 34 which can open/close an opening portion 33 provided on the dust box 32.

The dust box 32 is constituted of a box case 32a and a box cover 32b, the opposing faces thereof being openable, so as to accommodate the rotary brush 30 such that the rotary brush is enclosed along the length thereof. The opening portion 33 is provided in the bottom face of the box case 32a, through which the rotary brush 30 is exposed partially.

The sealing member 34 is disposed to oppose the opening portion 33 below the opening portion 33. The sealing member 34 is formed of a flexible elastic material such as synthetic rubber and supported by a lift mechanism 45 described later. Usually, this is located at a position which does not make contact with part of the rotary brush 30 exposed through the opening portion 33, and when a lift mechanism 45 is operated, the opening portion 33 can be closed.

The dust receiving passage 31 is a space portion within the dust box 32 formed in the axial direction of the rotary brush 30 on the side portion of the rotary brush 30, and is closed completely except for the opening portion 33 through which part of the peripheral face of the rotary brush 30 is exposed. The dust receiving passage 31 is formed below the axis of the rotary brush 30 so as to ensure reception of dust.

A scraping projection 35 is provided projectingly between the dust receiving passage 31 and the accommodating portion of the rotary brush 30 with the box cover 32b constituting the dust box 32. This scraping projection 35 is always inserted into fibers of the rotary brush 30 along the axial direction of the rotary brush 30 and located at a position in which the fibers make sliding contact as the rotary brush 30 is rotated.

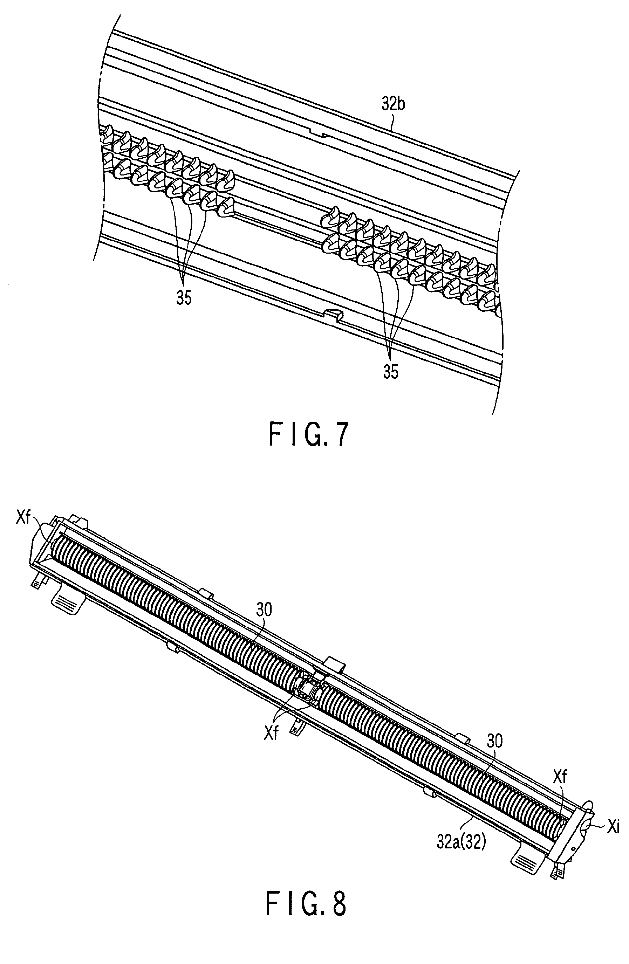

FIG. 7 is a perspective view of part of the interior of the box cover 32b for explaining the scraping projection 35.

The scraping projections 35 are provided integrally with the box cover 32b in the width direction of the box cover 32b such that they are projected at predetermined intervals. Thus, the scraping projections 35 are formed into a comb-like configuration and scrape dust attached to tips of the fibers of the rotary brush 30 as the rotary brush 30 is rotated. Due to the structure of the dust box 32, scraped dust drops into the dust receiving passage 31.

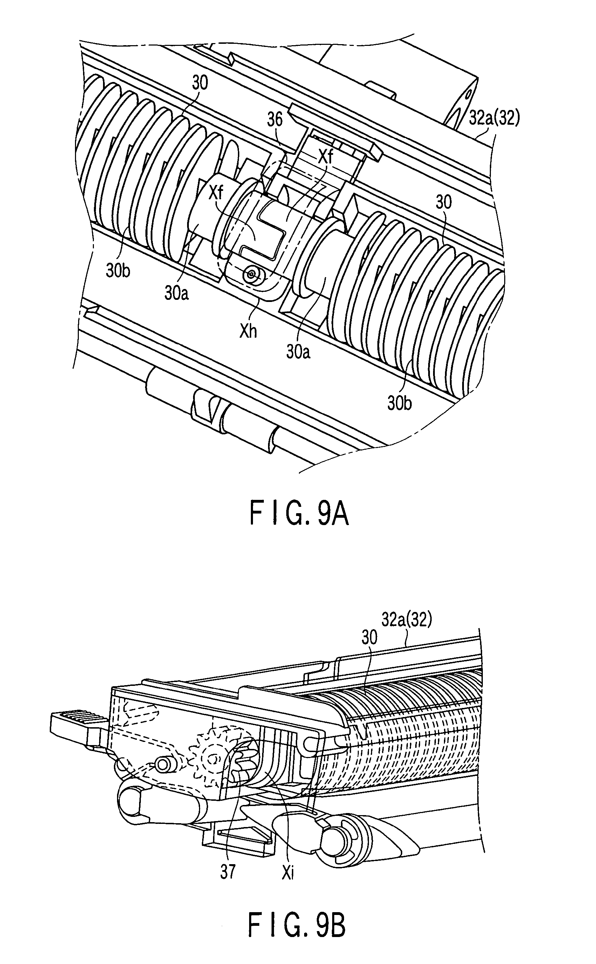

FIG. 8 is a perspective view of the dust box 32 from which the box cover 32b is removed, FIG. 9A is a perspective view showing a connecting structure of the rotary brush 30, and FIG. 9B is a perspective view of the side portion of the dust box 32.

The rotary brush 30 is constructed in a unit structure divided into right and left sections opposing the front air filter 17 and the upper air filter 20, separated in the right and left directions. That is, the axial length of the divided rotary brushes 30, 30 is equal to the length in the width direction of the front and upper air filters 17, 20 and they are disposed at the same positions.

Each divided rotary brush 30 includes a shaft portion 30a and a plurality of brush portions 30b which are provided on the peripheral face of the shaft portion 30a at a predetermined interval such that they are implanted spirally in the axial direction. Both ends of the shaft portion 30a of each divided rotary brush 30 serve as a forked connecting portion Xf and as shown in FIG. 9A, the respective divided rotary brushes 30 can be connected though one-touch operation by engaging their connecting portions Xf.

When the rotary brush 30 is inserted into the box case 32a in this condition, the connecting portion Xf of the divided rotary brush 30 is supported by a bearing portion h provided on the box case 32a. Additionally, by fitting a pressing cover 36 into the bearing portion h, the connecting portions Xf of the divided rotary brushes 30 are supported by the box case 32a rotatably.

FIG. 9B shows the side portion (right side portion of FIG. 8) of the dust box 32 in enlargement. A brush connecting gear 37 is supported rotatably on the side face of the dust box 32 such that the brush connecting gear 37 is exposed outside of the side face, and around this brush connecting gear 37 is covered with a cover except for a cutout opening portion Xi. If the divided rotary brushes 30 are connected to each other and inserted into the dust box 32, one of the divided rotary brushes 30 is connected to the brush connecting gear 37 through the connecting portion Xf.

Due to the structure of the rotary brush 30 and the dust box 32, the rotary brush 30 is attachable to/detachable from the dust box 32 to be mounted thereto, thus the rotary brush 30 is supported rotatably by the dust box 32. The rotary brush 30 can then be divided into two rotary brushes and they can be connected freely.

The opening portion 33 through which the rotary brush 30 provided on the dust box 32 is exposed opposes a mesh portion Xb provided between the peripheral frames or the intermediate frames of the divided front and upper air filters 17, 20. Thus, the rotary brush 30 can make a secure contact with the surface of the mesh portion Xb of the front air filter 17 and the upper air filter 20.

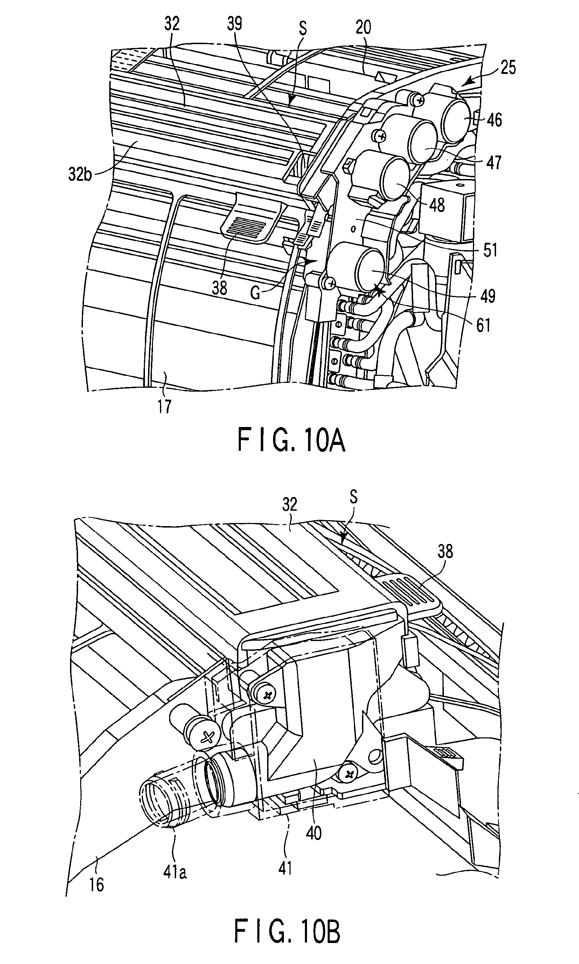

FIG. 10A is a perspective view of a side portion of the dust box 32 built into the indoor unit main body 1. FIG. 10B is a perspective view of the other side portion of the dust box 32 mounted on the frame assembly 16.

A handle 38 is provided integrally on right and left side portions of the dust box 32. When installing or removing the air filter cleaning unit S accommodating therein the rotary brush to/from the air filter cleaning unit mounting portion 16d of the frame assembly 16, this operation can be performed easily by gripping the handle 38.

As shown in FIG. 10A, a rectangular air introduction port 39 is provided in the box cover 32b which forms the top face on a side portion (right side portion) of the dust box 32. This air introduction port 39 is provided to oppose the dust receiving passage 31 so that they communicate with each other.

As shown in FIG. 10B, a dust discharge cover 40 is mounted integrally on the other side portion of the dust box 32. This dust discharge cover 40 is provided at a terminal end of the dust receiving passage 31 and communicates with the air introduction port 39 through the dust receiving passage 31. Then, with the air filter cleaning unit S installed at a predetermined portion of the frame assembly 16, the dust discharge cover 40 is accommodated within a discharge box 41 provided in the frame assembly 16.

A connection port 41a is provided integrally on the discharge box 41 and a connection hose 42 is connected thereto so as to communicate with the ventilation unit 11. Thus, an end portion of the dust receiving passage 31 formed within the dust box 32 communicates with exterior of the air filter cleaning unit S, that is, the exterior of the dust box 32, through the air introduction hole 39, while the other end portion of the dust receiving passage 31 communicates with the ventilation unit 11 through the dust discharge cover 40, the discharge box 41 and the connection hose 42.

The dust box 32 having such a structure is formed of an antistatic resin material and is further antimicrobial-impregnated. Thus, adhesion of dust and generation of fungus are prevented to maintain a clean state for a long period of time. The rotary brush 30 is also antimicrobial-impregnated so as to prevent adhesion of dust and generation of fungus, thereby to maintain a clean state for a long period of time.

Further, within the dust box 32, the portion which makes contact with dust is subjected to a smoothing surface treatment in order to enable dust to move easily. Particularly, the sectional area of the dust receiving passage 31 is designed so that a thrust diameter is 12 mm or more throughout the entire range and consequently, pressure loss is suppressed to a small level in an actual dust removing operation, which aids the flow of wind. Further, by forming a curved face of a radius of 2 mm or more on the windward side of a ridge line in the dust receiving passage 31, generation of faults such as dust being caught and halted can be prevented.

As described later, the dust box opening portion 33 is closed with the sealing member 34 so as to discharge dust within the dust receiving passage 31 into the ventilation unit 11. It has been made evident that, by setting the wind speed at the terminal end of the dust receiving passage 31 to 2m/s or higher, movement of dust within the dust receiving passage can be ensured.

As shown in FIG. 10A (shown in FIG. 3 also), the driving portion 25 is constituted of four driving sources, first to fourth driving motors 46 to 49 and a gear assembly G having these driving motors 46 to 49 on the side face thereof, and a casing 51 which accommodates the gear train, which is described later.

As shown in FIGS. 5 and 6, the first driving motor 46 and the second driving motor 47 serve as each driving source for a front moving mechanism 52 for moving the front air filter 17 and a top moving mechanism 53 for moving the upper air filter 20, and a filter moving mechanism is constituted of the front moving mechanism 52 and the top moving mechanism 53.

Although it is sufficient to prepare a large driving motor in order to secure the torque necessary for driving the front and top moving mechanisms 52, 53 in the above-described filter moving mechanism, if a large motor is mounted on the frame assembly, it interferes with the electric component box 9 and the front face panel 2 because of its large dimensions. Thus, two small driving motors 46, 47 each having a torque half of the necessary torque are prepared so as to eliminate the inconvenience of having to provide a large installation space.

The third driving motor 48 shown in FIG. 10A constitutes a brush driving mechanism for driving the rotary brush 30. The fourth driving motor 49 aims at driving a selection mechanism 61 which selects to which of the front moving mechanism 52 or the top moving mechanism 53 the driving force of the first and second driving motors 46, 47 is to be transmitted.

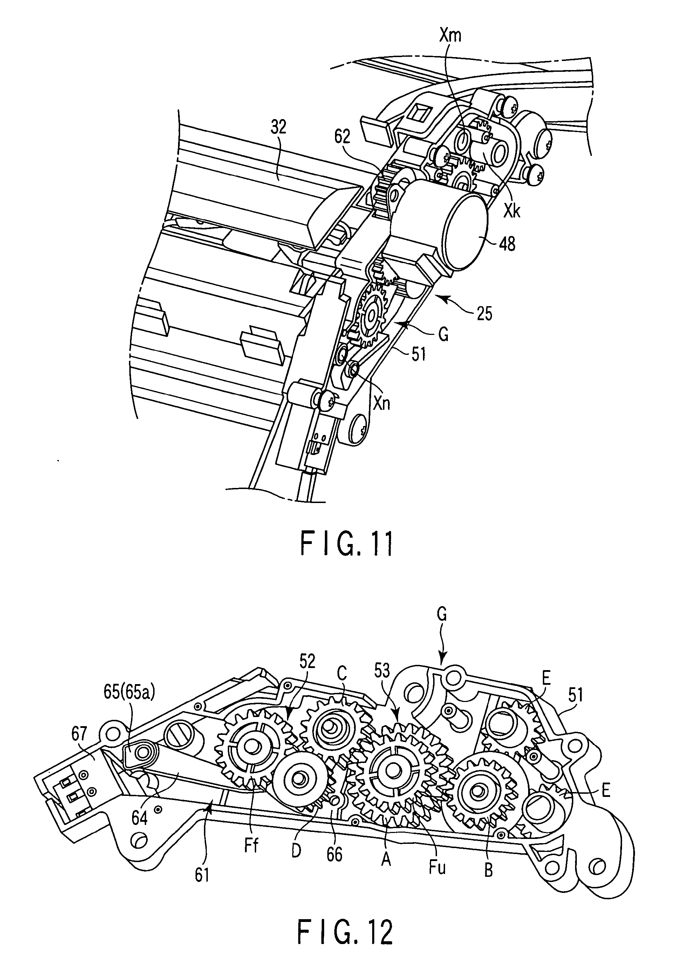

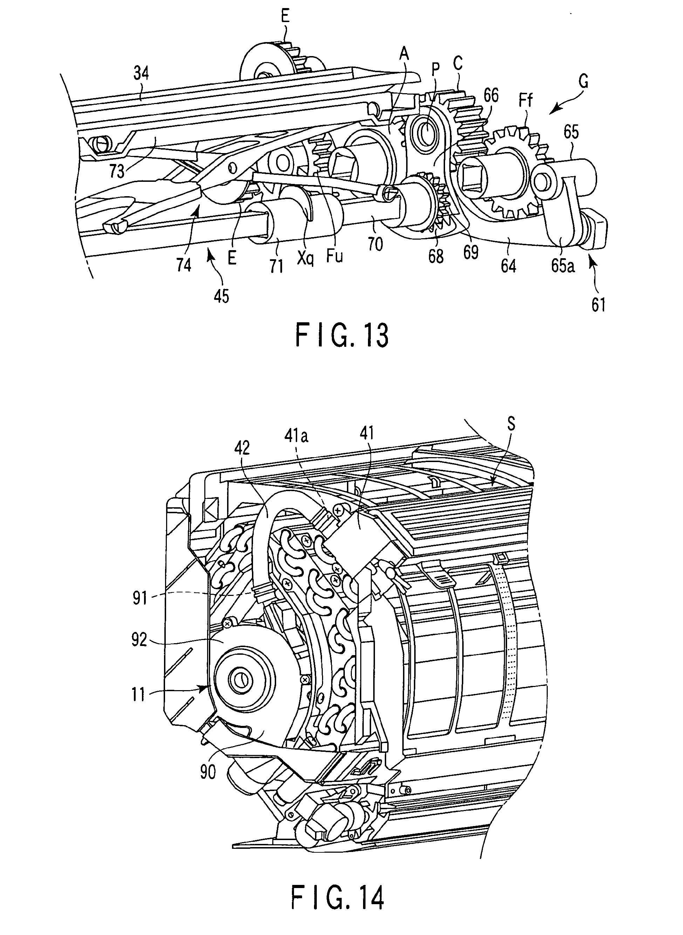

FIG. 11 is a perspective view with part of the driving portion 25 omitted. Only the third driving motor 48 is shown while the other driving motors are omitted. The side face portion of the gear case 51 constituting the gear assembly G is removed to indicate part of the gear train. This figure indicates that a supporting base Xk for the first driving motor 46 and a supporting base Xm for the second driving motor 47 are provided in the vicinity of each other and a supporting base Xn for the fourth driving motor 49 is provided on the bottom end portion of the casing 51. A drive gear is fitted to a rotation shaft of the third driving motor 48 and a brush driving gear 62 which meshes with the drive gear is supported such that it is projected from an end face of the third driving motor 48. This brush driving gear 62 is exposed partly from a cutout opening portion Xi in a cover provided on the side face of the dust box 32 described in FIG. 9B to mesh with the brush connecting gear 37 which is connected to the rotary brush 30. The third driving motor 48 and the brush driving gear 62 constitute the brush driving mechanism. In the meantime, the other gears shown here will be described with reference to FIGS. 12 and 13.

FIG. 12 is a perspective view of the gear train constituting the gear assembly G and FIG. 13 is a perspective view of part of the lift mechanism 45 for supporting the sealing member 34 while representing part of the gear train with the side face portion of the casing 51 omitted.

A pair of gears E having the same gear diameter are supported on the right corner of the casing 51 shown in FIG. 12 with a predetermined interval. The rotation shafts of the first driving motor 46 and the second driving motor 47 described previously are inserted into the supporting bases Xk, Xm on the shafts of the gears E and the motors 46, 47 are installed on the side face of the casing 51. The rotation shafts of the first and second driving motors 46, 47 are projected from the supporting bases Xk, Xm and the aforementioned gear E is fitted to each of them. Each gear E is meshed with a gear partially shown, supported by the casing 51 and a gear B is provided integrally on the rear face of this gear. The gear B meshes with the adjacent gear A having a large diameter and an upper gear Fu having a small diameter is provided coaxially with this gear A.

The gear A and the upper gear Fu are provided coaxially and the gear A is supported by a supporting shaft projected from the side face of the casing 51. The upper gear Fu is fitted to an end portion of the supporting shaft constituting the top moving mechanism 53. Thus, the gear A and the upper gear Fu are freely rotatable separately.

A gear C meshing with the gear A is supported by the casing 51. A gear D meshes with this gear C as described later and is supported by a front end of a driving arm 64 which constitutes the selection mechanism 61. A front gear Ff is supported at a position symmetrical to the upper gear Fu with respect to the gear C. This front gear Ff is fitted to an end portion of the supporting shaft constituting the front moving mechanism 52.

The filter moving mechanism composed of the front moving mechanism 52 and the upper moving mechanism 53 is constituted of a combination of the gear train G from the first and second driving motors 46, 47.

The rotation shaft of the fourth driving motor 49 (not shown) is projected inward through the casing 51 and a proximal end portion of a driving lever 65 is fitted and fixed to this rotation shaft. The driving lever 65 has a tongue portion 65a extending integrally in a direction perpendicular to the axial direction from the proximal end portion and the proximal end portion of the driving arm 64 is connected rotatably to the front end of this tongue portion 65a.

The selection mechanism 61 is constituted of the fourth driving motor 49, the driving lever 65, the driving arm 64 and the gear D. That is, the driving lever 65 and the driving arm 64 are rotated integrally corresponding to a rotation direction of the fourth driving motor 49 so as to change the position of the gear D at the front end of the driving arm 64.

Further, the front end portion of the driving arm 64 and the gear D, which constitute the selection mechanism 61, is supported rotatably by the bottom portion of a gear arm 66 via a pin. The top end portion of the gear arm 66 is supported by the casing 51 via a supporting shaft p and the gear C is supported by this supporting shaft p.

The gear arm 66 is rotatable around the supporting shaft p together with the gear C, and the gear D and the front end portion of the driving arm 64 are connected to the bottom end portion of the gear arm 66 rotatably. Thus, the gear D is always in mesh with the gear C regardless of the rotation posture of the gear arm 66.

The gear D to be connected to the driving arm 64, with the driving arm 64 rotated by the fourth driving motor 49 via the driving lever 65, can mesh with either the upper gear Fu or the front gear Ff while maintaining a meshing condition with the gear C or can select a position where the gear D meshes with neither of the gears Fu and Ff.

As shown in FIG. 12, a micro switch 67 is mounted on the corner of the casing 51. The driving arm 64 makes contact with an actuator of the micro switch 67 and turns to the ON state depending on the rotation position thereof, so that a detection signal is sent to the control portion.

When the micro switch 67 is turned on by the driving arm 64, the gear D supported by the driving arm 64 is located at a place where the gear D does not mesh with either the upper gear Fu or the front gear Ff. In other words, when the micro switch 67 is turned off, the gear D is located at a position in which the gear D is meshing with either the upper gear Fu or the front gear Ff.

The gear arm 66 constituting the selection mechanism 61 serves as the lift mechanism 45 for supporting the sealing member 34. As shown in FIG. 13, the bottom end portion of the gear arm 66 is formed to have a predetermined curvature radius around the supporting shaft p and an internal gear portion 68 is provided on the inside face thereof. A selection gear 69 is in mesh with the internal gear portion 68 and the selection gear 69 is fitted and fixed to an end portion of a sealing supporting shaft 70 provided such that the sealing supporting shaft 70 penetrates the side face of the casing 51.

The sealing supporting shaft 70 is supported by a bearing device mounted on the frame assembly 16 such that sealing supporting shaft 70 is provided on the bottom face of the sealing member 34 opposing along the length direction of the sealing member 34. Thus, when the fourth driving motor 49 constituting the selection mechanism 61 is driven so as to rotate the gear arm 66 via the driving lever 65 and the driving arm 64, the selection gear 69 is also rotated.

A seal driving cam 71 is provided at a predetermined position of the sealing supporting shaft 70. This seal driving cam 71 is formed entirely cylindrically and a semi-circular cam portion Xq is provided on part of the peripheral face such that the semi-circular cam portion Xq is projected in the radial direction.

The sealing member 34 is mounted on the seal base 73 and the seal base 73 is supported by a seal guide mechanism 74 constructed using a pantograph mechanism. The seal guide mechanism 74 is provided on the frame assembly 16 and folded into a flat configuration in a normal posture in which no lift force is applied and, when an upward lifting force is applied, the seal guide mechanism 74 is raised so as to push the sealing member 34 upward together with the seal base 73.

The seal driving cam 71 is constructed so as to make contact with/part from part of the seal guide mechanism 74. With the seal driving cam 71 making contact with part of the seal guide mechanism 74, the seal guide mechanism 74 is raised so as to push up the sealing member 34 and, when the seal driving cam 71 departs from the seal guide mechanism 74, the seal guide mechanism 74 is naturally folded into the flat configuration and the sealing member 34 drops.

The lift mechanism 45 for the sealing member 34 is constituted of the gear arm 66, the seal driving cam 71 and the seal guide mechanism 74.

Next, the front moving mechanism 52 and the top moving mechanism 53 will be described.

As shown in FIGS. 5 and 6, a pair of supporting shafts 75a, 75b are provided along both side ends of the sealing member 34 for opening/closing the opening portion 33 of the dust box 32. The front gear Ff or the top gear Fu which constitutes the gear train is fitted and fixed to an end portion (right side portion) of the supporting shafts 75a, 75b as described in FIG. 12. The front gear Ff is mounted on the supporting shaft 75a on the left side and the upper gear Ff is mounted on the supporting shaft 75b on the right side in FIGS. 5 and 6.

The other end portions (left end portion) of the supporting shafts 75a, 75b are supported rotatably by the frame assembly 16 via a bearing device. A front air filter driving gear 76 and an upper air filter driving gear 77 are fitted and fixed to a position opposing the central reinforced sash Xa of the divided front/upper air filters 17, 20 at an intermediate portion between the supporting shafts 75a and 75b. Part of the front and upper air filter driving gears 76, 77 is projected forward or upward through an opening portion provided in the frame assembly 16.

A rack (spur gear) 78 is provided on the rear face of the central reinforced sash Xa in the length direction. The front and upper air filter driving gears 76, 77 projected from the opening portion of the frame assembly 16 mesh with each rack 78 as a pinion. In the meantime, the present invention is not restricted to providing the central reinforced sash Xa with the rack 78 and it is permissible to provide continuous concave/convex grooves or holes with predetermined intervals and further provide means in engagement therewith on the supporting shafts 75a, 75b.

Particularly, as shown in FIG. 6, the axial positions of the front air filter driving gear 76 and the upper air filter driving gear 77 are set at positions which form an isosceles triangle when the axial position of the rotary brush 30 is regarded as an apex.

When the front gear Ff constituting the gear train is rotated, the front air filter driving gear 76 provided on the supporting shaft 75a is rotated so as to urge the front air filter 17 in a rotation direction of the front air filter driving gear 76 due to the relation between the pinion and the rack. When the upper gear Fu constituting the gear train is rotated, the upper air filter driving gear 77 provided on this supporting shaft 75b is rotated so as to urge the upper air filter 20 in the rotation direction of the upper air filter driving gear 77 due to the relation between the pinion and the rack.

The front moving mechanism 52 for moving the front air filter 17 is constituted of the front air filter driving gear 76 and the rack 78 provided on the front air filter 17. The upper moving mechanism 53 for moving the upper air filter 20 is constituted of the upper air filter driving gear 77 and the rack 78 provided on the upper air filter 20.

A front guide 80 and an upper guide 85 are provided in the box case 32a constituting the dust box 32. That is, the front guide 80 and the upper guide 85 are integrally installed to the air filter cleaning unit S.

For further explanation, the front guide 80 is provided in the width direction of the box case 32a and includes a front guide shaft 81, which is a stainless rod. This front guide shaft 81 is positioned on the top face side of the frame assembly 16 and provided in parallel to the supporting shaft 75a to which the front air filter driving gear 76 is fitted via the frame assembly 16.

An interval maintaining device 82 for maintaining the interval between the dust box 32 and the front guide shaft 81 uniform is provided on both the right and left sides and the central portion of the front guide shaft 81. The interval maintaining device 82 is provided with a projection 82a which is capable of contacting/leaving the corner portion of the box case 32a. When this projection 82a makes contact with the box case 32a, the position of the front guide shaft 81 is fixed, so that the interval between the dust box 32 and the front guide shaft 81 is set uniform along the entire length.

The front guide shaft 81 is equipped with a filter guide 83 at a portion opposing the central reinforced sash Xa of the divided front air filter 17. This filter guide 83 has a modified oval section, and the surface thereof is formed of smooth synthetic resin and has a slightly larger width than that of the central reinforced sash Xa.

A guide jaw portion Xt is provided on both side portions in the width direction on the top face side of each filter guide 83, the width between which enables the central reinforced sash Xa to be fitted therebetween. In normal state, part of the bottom end of the peripheral face of the filter guide 83 makes contact with the top face of the central reinforced sash Xa of the front air filter 17.

Likewise, the upper guide 85 is provided in the width direction of the box case 32 and equipped with the upper guide shaft 86, which is a stainless rod. The upper guide shaft 86 is positioned on the top face side of the frame assembly 16 and provided in parallel to the supporting shaft 75b to which the upper air filter driving gear 77 is fitted through the frame assembly 16.

Although not shown here, the interval maintaining device for maintaining the interval between the dust box 32 and the upper guide shaft 86 uniform is provided on both the right and left sides and the central portion of the upper guide shaft 86. This interval maintaining device has a projection capable of contacting/leaving the corner portion of the box case 32a and when this projection contacts the box case 32a, the position of the upper guide shaft 86 is fixed, and the interval between the dust box 32 and the upper guide shaft 86 is set uniform throughout the entire length.

The upper guide shaft 85 is provided with a filter guide 88 at a position opposing the central reinforced sash Xa of the divided upper air filter 20. This filter guide 88 has a modified oval section and the surface thereof is formed of smooth synthetic resin and has a slightly larger width than that of the central reinforced sash Xa.

A guide jaw portion Xt is provided on both side portions in the width direction on the top face side of each filter guide 88, the width between which enables the central reinforced sash Xa to be fitted therebetween. In a normal state, part of the bottom end of the peripheral face of the filter guide 88 makes contact with the top face of the central reinforced sash Xa of the upper air filter 20.

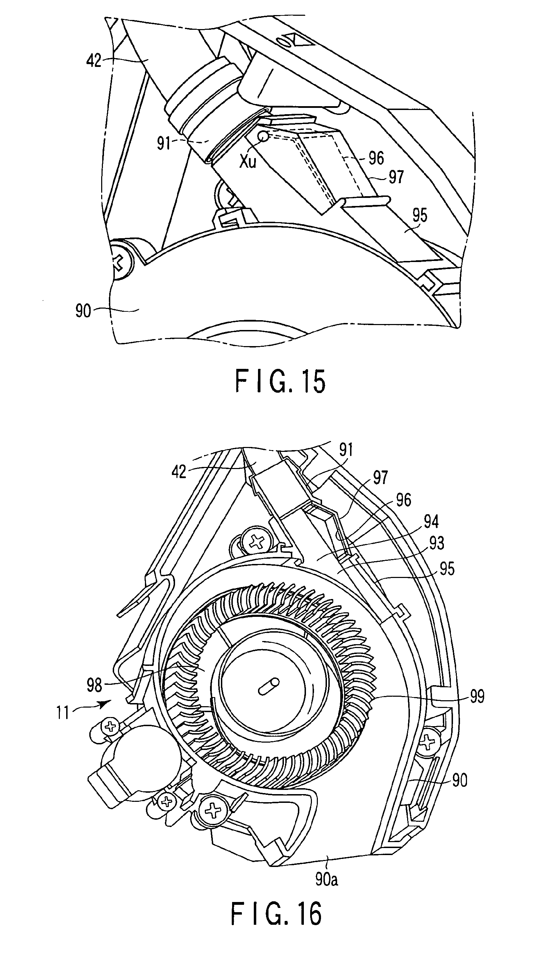

FIG. 14 is a perspective view for explaining the connecting structure between the air filter cleaning unit S and the ventilation unit 11, FIG. 15 is a perspective view of part of the interior of the ventilation unit 11, and FIG. 16 is a perspective view with the side face cover of a fan casing 90 constituting the ventilation unit 11 removed.

The ventilation unit 11 has a function of discharging air on the primary side or secondary side of the heat exchanger 8 after air in a room is introduced into the indoor unit main body 1, and serves as an air suction/discharge unit which sucks dust collected by the air filter cleaning unit S from the front air filter 17 and the upper air filter 20, as described later, and discharges the dust outdoors. Therefore, the air suction/discharge unit will be described as the ventilation unit 11 below.

As described in FIG. 10B, the dust box 32 constituting the air filter cleaning unit S is equipped with the dust discharge cover 40 on the side end portion thereof, and is accommodated in the discharge box 41 provided on the frame assembly 16 with the air filter cleaning unit S installed on the frame assembly 16.

As shown in FIG. 14, the hose connecting port 41a is provided integrally on the discharge box 41 and an end portion of the connecting hose 42 is connected thereto. The connecting hose 42 is formed to have a slight curve, and is connected to a connecting port 91 provided on the ventilation unit 11. That is, the connecting hose 42 is constructed so as not to be clogged with dust, because the dust removed from the front and upper air filters 17, 20 is circulated within the connecting hose 42, as described later.

As shown in FIG. 15, a mounting hole 93 is provided in the fan casing 90 constituting the ventilation unit 11, and a dust guide case 95 having the connecting port 91 and a dust discharge passage 94 is installed onto the outer peripheral face of the fan casing 90 so as to communicate with the mounting hole 93. The connecting hose 42 extending from the air filter cleaning unit S is connected to the connecting port 91 so as to communicate with the interior of the fan casing 90 of the ventilation unit 11 through the dust discharge passage 94.

A wind force damper 96 is provided midway between the dust discharge passage 94 in the dust guide case 95 and this wind force damper 96 is covered with a damper case 97. Dust introduced from the connecting hose 42 to the dust discharge passage 94 is introduced into the fan casing 90 of the ventilation unit 11 through the wind force damper 96.

The wind force damper 96 is formed of a sheet piece which is bent to a substantially inverted V-shape in section and the damper case 97 is formed to correspond to the shape of the wind force damper 96, projecting from the dust guide case 95. An end of the wind force damper 96 is supported rotatably by the dust guide case 95 via a supporting shaft Xu and the other end of the wind force damper 96 droops into the dust discharge passage 94 due to its weight so as to close the dust discharge passage 94.

When a wind force higher than a predetermined pressure is applied to the connecting hose 42, the other end of the wind force damper 96 is pushed upward by the wind force so as to open the dust discharge passage 94. If the wind is lower than the predetermined pressure, the wind force damper 96 closes the dust discharge passage 94.

As shown in FIG. 16, the ventilation unit 11 is constituted of a ventilation passage opening/closing damper 98 provided in a ventilation suction port which is open to the central portion of the side face of the fan casing 90, and a mechanism for driving this damper 98 and a wind feeding mechanism, such as a ventilation fan 99, is disposed within the fan casing 90.

The ventilation passage opening/closing damper 98 is constituted of a circular partition plate for covering the ventilation suction port and a circular damper disposed rotatably on the surface, and has an opening at each predetermined position of the partition plate and damper. That is, when the damper is rotated so that both the openings overlap, those openings communicate with each other.

One of the above-mentioned openings communicates with the secondary side space while the other one communicates with the primary side space of the heat exchanger 8 on a stage before it passes the front/upper air filters 17, 20 and is introduced to the heat exchanger 8. The driving mechanism of the opening/closing damper 98 drives and rotates the ventilation passage opening/closing damper 98 based on a control signal.

When the secondary side ventilation mode is selected, the heat exchanger secondary side air passing the heat exchanger 8 is introduced to the ventilation fan 99. When the primary side ventilation mode is selected, the heat exchanger primary side air before passing the front/upper air filters 17, 20 and introduced to the heat exchanger 8 is introduced to the ventilation fan 99. When the fully closed mode is selected, only the ventilation suction port is closed.

The fan casing 90 has an exhaust port 90a, to which an exhaust duct is connected. The portion of the fan casing 90 that is provided with the exhaust port 90a from the mounting hole 93 to which the dust guide case 95 is connected is set most apart from the front end of the ventilation fan 99. The exhaust duct is projected outdoors through the mounting wall face of the indoor unit main body 1, thus the wind blower mechanism 100 constituting the ventilation unit 11 communicates with the exterior through the ventilation duct.

When, by selecting the secondary side ventilation mode or the primary side air ventilation mode, the ventilation passage opening/closing damper 98 is changed over to open the ventilation suction port of the fan casing 90, the ventilation fan 99 in the fan casing 90 is driven and rotated so as to discharge heat exchanger secondary side air or heat exchanger primary side air outdoors, thereby achieving the ventilation effect. The primary side or the secondary side is selected according to the state of the indoor unit main body as well as the state of a room to be air-conditioned. Further, when the fully closed mode is selected, the ventilation suction port is closed by the opening/closing damper 98.

The connecting hose 42 which connects the air filter cleaning unit S with the ventilation unit 11 is connected to the dust guide case 95 provided between the ventilation suction port of the fan casing 90 and the exhaust port 90a. Thus, if the ventilation fan 99 is driven with the ventilation suction port closed, negative pressure is applied to the air filter cleaning unit S through the connecting hose 42.

Next, an operation of the indoor unit of the air conditioner having such a structure will be described.

When a user presses a remote control (remote control panel) operation button, the indoor blower 10 is driven so as to activate the air cleaning unit 18. Further, a compressor in the outdoor unit communicating with the indoor unit through a refrigerant pipe is driven so as to start up the refrigeration cycle operation.

Indoor air is introduced into the indoor unit main body 1 through the front face suction port 4 and the top face suction port 5 and passes the divided front air filters 17 and the upper air filters 20. At this time, dust contained in the indoor air is captured by the front air filters 17 and the upper air filters 20. After dust is removed by the front air filters 17, the indoor air passes a pair of electric dust collectors 22 constituting the air cleaning unit 18 and minute particles of dust are electrically collected and deodorized.

Purified indoor air flows to the heat exchanger 8, in which, after the indoor air is introduced, heat exchange with refrigerant is carried out. After that, the heat-exchanged air is introduced along the blow-out air passage 15 and blown out into a room from the blow-out port 6, guided by the blow-out louvers 7a, 7b, thereby continuing effective air conditioning.

The user operates the remote controller (remote control panel) to select "air filter cleaning mode" or, after air conditioning of a predetermined period is ended or at a preliminarily set time or at a preliminarily determined time interval, "air filter cleaning mode" is automatically carried out.

When the air filter cleaning mode is selected, the control portion sends a drive signal to the first driving motor 46, the second driving motor 47 and the third driving motor 48 in the driving portion. First, the front moving mechanism 52, which constitutes the filter moving mechanism, is driven and at the same time, the brush driving mechanism is actuated. When selection of the air filter cleaning mode is ended, the drive signal is sent to the fourth driving motor 49 and the selection mechanism 61 connected to the fourth driving motor 49 changes the gear D to a position where gear D meshes with the front gear Ff.

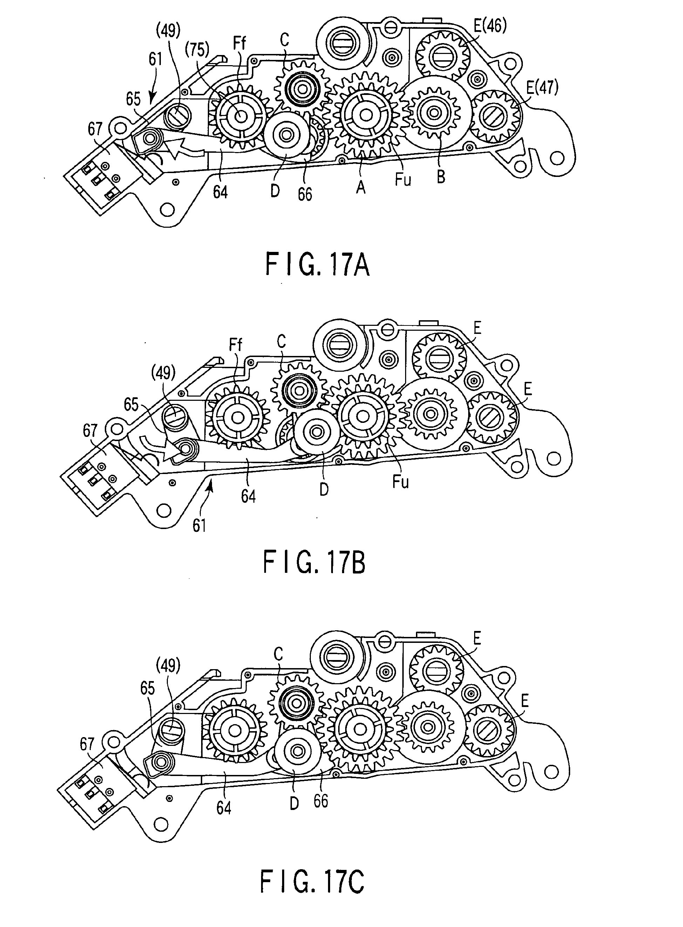

More specifically, as shown in FIG. 17A, the drive arm 64 of the selection mechanism 61 is urged and moved in the direction of an arrow (leftward) in the Figure, so that the gear D is in mesh with the front gear Ff while maintaining the mesh with the gear C.

With this condition, the pair of gears E is rotated in the same direction by the first and second driving motors 46, 47. The gear B is rotated via the gear E, so that a rotation force is transmitted from the gear A in mesh with this gear B to the gear C. Then, the rotation force is transmitted from the gear C to the front gear Ff via the gear D so that the supporting shaft 75a supporting the front gear Ff is rotated. This supporting shaft 75a is provided with the front air filter driving gear 76 and the front air filter 17 is pressed against the front guide 80 from the top face side to be in mesh with the rack 78 of the central reinforced sash Xa.

When the front air filter driving gear 76 is rotated, the divided front air filters 17 start to move securely by the same amount at the same time. The divided front air filters 17 come out of the air filter storage portion 16b on the front face side and both side portions thereof are moved upward, guided by the guide portion of the frame assembly 16.

At this time, the seal driving cam 71, which constitutes the lift mechanism 45, is set apart from the seal guide mechanism 74 and the seal guide mechanism 74 is folded into a flat configuration, and the sealing member 34 is located at a descent position so that the opening portion 33 of the dust box 32 is opened.

Thus, the front air filter 17 passes through a gap formed between the bottom end of the dust box 32 and the sealing member 34. At the same time, the brush driving mechanism is actuated and the rotary brush 30 is rotated clockwise as shown in FIGS. 5 and 6. The front air filter 17 comes to oppose the rotary brush 30 successively from the top end toward the bottom end side while moving upward in sliding contact therewith.

Dust attached to the front air filter 17 is scraped and removed smoothly and securely by the rotary brush 30. That is, because the rotary brush 30 is divided into right and left portions with respect to the front air filter 17 divided into the right and left portions, any unevenness in contact with the divided front air filters 17 is reduced, thereby enhancing the dust scraping effect.

The rotary brushes 30, which have divided right and left portions, are combined and rotated integrally. Because the two front air filter driving gears 76 which constitute the front moving mechanism 52 are provided on a single supporting shaft 75a and rotated at the same time with respect to the divided front air filters 17, the right and left divided front air filters 17 can be moved by the same amount at the same time.

Dust is transferred from the front air filter 17 to the rotary brush 30. Immediately after this, the rotary brush 30 comes into contact with the scraping projection 35 when passing. Because the scraping projection 35 is formed into a comb shape, the dust transferred to the rotary brush is scraped and drops onto the dust receiving passage 31. Because the dust receiving passage 31 is of an enclosed structure, except for the portion opposing the rotary brush 30, which is open, no scraped dust is scattered to the surroundings of the dust receiving passage 31.

Immediately after the front air filter 17 from which the attached dust has been removed comes out of a portion of the dust box 32 with which the rotary brush 30 makes contact, the top edge of the front air filter 17 is introduced to a gap between the upper guide 85 and the corner portion of the dust box 32. Because the gap is set accurate and uniform by the interval maintaining device 82, the front air filter 17 passes the aforementioned gap smoothly.

When the air filter 17 passes the gap, the central reinforced sash Xa comes into sliding contact with the filter guide 88, which constitutes the upper guide 85. More specifically, the central reinforced sash Xa slides through the guide jaw portion Xt provided on the filter guide 88. Further, because both side portions of the front air filter 18 are guided along the guide portion provided on the frame assembly 16, the front air filter is moved upward with the correct posture, without being inclined in the width direction.

Finally, the front air filter 17 is deprived of dust by the rotary brush 30 and inserted into the air filter storage portion 16c on the top face side for storing the upper air filter 20 provided on the frame assembly 16. That is, the front air filter 17 is guided to the top portion of the upper air filter 20 so that they oppose each other across a minute gap. When the top end of the front air filter 17 is inserted into the rear end of the air filter storage portion 16c on the top face side, the control portion controls the first and second driving motors 46, 47 to stop temporarily.

Thus, each front air filter 17 is moved in the outgoing direction so as to remove dust from the entire surface thereof by the air filter cleaning unit S. Then, each front air filter is stored in the second air filter storage portion 16c such that each air filter 17 opposes the upper air filter 20. In this condition, the peripheral frames of the bottom end of the front air filter 17 are located within the dust box 32 and the central reinforced sash Xa is pressed by the filter guide 88 so that the mesh condition between the rack 78 and the front air filter driving gear 76 is maintained.

Next, the control portion sends a drive signal for rotating the first and second driving motors 46, 47 in an opposite direction thereto. The third driving motor 48 is controlled to accelerate the rotation speed without changing the rotation direction. Each gear constituting the gear train is rotated in an opposite direction to the above-described rotation direction and the front moving mechanism 52 moves down the divided front air filters 17 by the same amount at the same time. In the meantime, the fourth driving motor is kept stopped.

Although all dust is removed from the front air filter 17 by the above-described dust removing operation, sometimes dust remains on the front air filter 17. Thus, when the front air filter 17 is moved down, sliding contact between the air filter and the rotary brush 30 is maintained, and consequently, all the remaining dust is removed completely.

Because the rotation direction of the rotary brush 30 is not changed, dust transferred to the rotation brush 30 is removed from the rotary brush 30 by the scraping projection 35 and drops into the dust receiving passage 31. At this time also, all dust is collected in the dust receiving passage 31, and not scattered to the surroundings.

The front air filter 17 is moved in incoming direction and returned to the air filter storage portion 16b on the front face side from the air filter storage portion 16c on the top face side. The both side portions of the front air filter 17 are moved smoothly without any change to their posture, guided by the guide portion of the frame assembly 16.

Finally, the front air filter 17 is completely returned to the air filter storage portion 16b on the front face side. When the control portion senses this state, the control portion sends a stop signal to the first and second driving motors 46, 47. As a result, the dust removing operation of the front air filter 17 is ended.

Next, the control portion sends a drive signal to the fourth driving motor 49 so as to actuate the selection mechanism 61. As shown in FIGS. 17A and 17B, the fourth driving motor 49 is driven so as to rotate the driving lever 65 counterclockwise. The driving arm 64 connected to the driving lever 65 is moved in the rightward direction in the Figure, so that the gear D supported by the driving arm 64 meshes with the upper gear Fu while maintaining the mesh with the gear C. Thus, a rotation driving force transmitted from the first and second driving motors 46, 47 to the gear D is in turn transmitted to the upper gear Fu.

On the other hand, as the driving arm 64 is moved, the gear arm 66 connected to this driving arm 64 is rotated by a predetermined angle around a supporting shaft portion p as a fulcrum. The selection gear 69, which meshes with the internal gear portion 68 of this gear arm 66, is rotated, so that the sealing supporting shaft 70 and the seal driving cam 71 are rotated. The cam portion Xq provided on the seal driving cam 71 is set apart from the seal guide mechanism 74, and the seal guide mechanism 74 is folded into a flat configuration.

While the seal driving cam 71 is rotated, the cam portion Xq comes into contact with the seal guide mechanism 74 so as to push up the sealing member 34 and the seal driving cam 71 continues rotating, so that the cam portion Xq departs from the seal guide mechanism 74 again. Therefore, the seal guide mechanism 74 is folded into the flat configuration again and consequently, the sealing member 34 departs from the opening portion 33 of the dust box 32 so as to form a gap between them.

The control portion sends a drive signal to the first and second driving motors 46, 47, and sends a drive signal to the third driving motor 48 for obtaining the same rotation speed as when the upper air filter 20 is returned. The top moving mechanism 53 is actuated and the divided upper air filters 20 come out of the air filter storage portion 16c on the top face side and then are fed by the same amount at the same time so as to oppose the front side of the front air filter 17 stored in the air filter storage portion 16b on the front face side. The upper air filters 20 pass the dust box 32 during their passage, so that dust is removed by the rotary brush 30.

Likewise, dust removed from the upper air filter 20 by the rotary brush 30 is collected by the dust receiving passage 31 securely without being scattered to the surroundings. The upper guide 85 presses the upper air filter 20 against the upper air filter driving gear 77 so as to achieve a good mesh between the central reinforced sash Xa and the rack 78. The front guide 17 and the guide portion guide the upper air filter 20 without any inclination.

The control portion controls to stop the first and second driving motors 46, 47 when the outgoing motion of the upper air filter 20 is terminated and the upper air filter 20 opposes the air filter storage portion 16b on the front face side for storing the front air filter 17 and on the front portion side of the front air filter 17 with a minute gap. Then, the control portion sends a drive signal for reverse rotation to the first and second driving motors 46, 47 so as to drive respective gears and the upper air filter driving gear 77 which constitute the gear train in the opposite direction, which raises the upper air filter 20.

A drive signal is sent to the third driving motor 48 and the fourth driving motor 49 is kept stopped. This time, the rotary brush 30 is rotated in a clockwise direction, which is the opposite direction with respect to the upper air filter 20 which is moved upward, and consequently, even if dust remains on the upper air filter 20, the dust can be removed securely.

At this time, the upper air filter is moved smoothly guided by the front guide 80 and the guide portion of the frame assembly 16 without being inclined in posture. When the upper air filter 20 is returned to the air filter storage portion 16c again, the control portion sends a stop signal to the first and second driving motors 46, 47 and the third driving motor 48. The dust removing operation on the entire surface of the upper air filter 20 is terminated.

Although the front air filter 17 is moved in a reciprocating direction so as to remove dust completely and then the upper air filter 20 is moved in a reciprocating direction so as to remove dust completely, as described above, the present invention is not restricted to this example, and it is permissible to remove dust from the upper air filter 20 and then remove dust from the front air filter 17.

That is, any one of the air filters is reciprocated with respect to the air filter cleaning unit S so as to remove adhering dust and next, the other air filter is reciprocated with respect to the air filter cleaning unit S so as to remove adhering dust. Alternatively, it is permissible to provide a sensor for detecting the amount of adhering dust on the front air filter 17 and the upper air filter 20 and perform the dust removing operation to only an air filter having more adhering dust.

When the cleaning operation on the divided front air filters 17 and upper air filters 20 is completed, the control portion sends a drive signal to the fourth driving motor 49 so as to actuate the lift mechanism 45. That is, the fourth driving motor 49 is rotated in the opposite direction from the state shown in FIG. 17B and when part of the driving arm 64 turns on the micro switch 67 as shown in FIG. 17C, the control portion stops the fourth driving motor 49 by receiving that signal.

The gear D supported by the driving arm 64 is set apart from the upper gear Ff so as to eliminate the mesh relationship and set apart from the lower gear Fu also, not kept in mesh therewith. The gear D is in the middle between the upper gear Fu and the front gear Ff and in mesh with only the gear C. The gear arm 66 connected to the driving arm 64 is in a substantially vertical position and the cam portion Xq of the seal driving cam 71 provided on the sealing supporting shaft 70 is also in a substantially vertical position.

As shown in FIG. 13, the seal guide mechanism 74 is raised by the cam portion Xq, so that the sealing member 34 mounted on the seal base 73 is urged upward and adheres to the bottom face of the dust box 32. Thus, the opening portion 33 provided in the bottom face of the dust box 32 is closed completely by the sealing member 34.

Next, the control portion selects a ventilation damper fully closed mode for the ventilation unit 11 and sends a drive signal to the ventilation fan 99. As the ventilation fan 99 is rotated, a negative pressure is applied to the dust discharge passage 94 in the dust guide case 95 so as to open the wind force damper 96 provided thereon. Thus, a negative pressure is applied to the air filter cleaning unit S from the dust guide case 95 through the connecting hose 42 and the discharge box 41.

More specifically, a negative pressure due to the rotating drive of the ventilation fan 99 is applied to the dust receiving passage 31 through the dust discharge cover 40 covered by the discharge box 41, so that dust collected in the dust receiving passage 31 is sucked.

Because an end portion of the dust receiving passage 31 communicates with the air introduction port 39 provided at the end portion of the box case 32a, air within the dust box 32 is sucked forcibly into the dust receiving passage 31 from the air introduction port 39. Thus, dust collected by the dust receiving passage 31 is removed by the sucked air and introduced to the connecting hose 42 from the dust box 32.

Additionally, the material of the dust box 32 is selected appropriately, and the surface thereof and of all other parts of the dust receiving passage 31 are made to allow dust to pass easily. Consequently, dust is discharged quickly and securely without being deposited in the dust receiving passage 31, and is sucked into the ventilation unit 11 from the connecting hose 42.

Dust introduced through the connecting port 91 of the dust guide case 95, the dust discharge passage 94 opened by the wind force damper 96 and the mounting hole 93 of the fan casing 90 from the connecting hose 42 is moved along the inner peripheral face of the fan casing 90 and discharged outdoors from the discharge port 90a.

The distance between the front edge of the ventilation fan 99 and the peripheral wall of the fan casing 90 is larger than other portions in the interval between the mounting hole 93 and the discharge port 90a, and dust collected in the dust receiving passage 31 is introduced therein. Thus, the amount of dust adhering to the front edge of the ventilation fan 99 can be suppressed to maintain cleanliness of the ventilation fan 99 for a long period.

Although as described above, the frame assembly 16 provided with the front air filter 17, the upper air filter 20 and the air cleaning unit 18 can be mounted onto the existing indoor unit main body 1, some existing indoor unit types have no ventilation unit 11. In this case, no air introduction port is provided in one side portion of the dust box 32 constituting the air filter cleaning unit S and no dust discharge cover is provided on the other side portion.

Such an air filter cleaning unit can remove dust adhering to the front air filter 17 and the upper air filter 20 securely and collect the dust in the dust receiving passage 31. Then, a user opens the front face panel 2 after a predetermined period of time so as to expose the air filter cleaning unit S and remove it. The air filter cleaning unit S can be removed easily because it is mounted detachably to the air filter cleaning unit mounting portion 16d of the frame assembly 16.

With this condition, dust remains collected in the dust receiving passage 31, and the box case 32a and the box cover 32b which constitute the dust box 32 are combined into a substantially enclosed structure. Consequently, no dust within the dust box 32 is scattered to the surroundings or drops during removal.

When the air filter cleaning unit S is placed at a low place and the box cover 32b is released from the box case 32a, it can be confirmed that dust is collected in the dust receiving passage 31 within the box case 32a. Thus, the dust may be sucked up with a vacuum cleaner or the like.

That is, by mounting the frame assembly 16 on a conventional indoor unit, the air conditioner having an air filter automatic cleaning function can be constructed, so that the present invention can be applied to air conditioners in general.

According to the present invention, as described above, the air filters 17, 20 are reciprocated with respect to the air filter cleaning unit S so as to remove adhering dust. Because dust adhering to the air filters 17, 20 is removed by the rotary brush 30 which constitutes the dust removing means provided on the air filter cleaning unit S, the air filter cleaning unit S is constructed in a compact configuration, thereby not requiring any special installation space.

Because dust collected by the air filter cleaning unit S using the ventilation unit 11, which is a suction/exhaust unit, is discharged outdoors, no time or labor is required. At this time, the opening portion 33 formed in the dust box 32 is closed by the sealing member 34 and thus, no air leaks from the dust receiving passage 31, thereby achieving effective suction of dust.

Further, according to the present invention, after the cleaning operation is ended, dust collected in the dust receiving passage 31 can be discharged outdoors by an operation of the ventilation fan 99 of the ventilation unit 11, which is a suction/exhaust unit connected to one side portion thereof. At this time, the dust receiving passage 31 is constructed so that the opening portion 33 in the bottom face of the dust box 32 is closed by the sealing member 34, thereby eliminating leakage of air, so as to enhance the dust suction effect.

The present invention is not restricted to the above-described embodiments, and the filter may be constructed of a single sheet. The components may be modified within the scope not departing from the spirit of the invention. Various inventions may be formed by an appropriate combination of the plural components disclosed in the above-described embodiments.

According to the present invention, after the cleaning operation is ended, dust collected in the dust receiving portion of the dust box can be discharged outdoors through the suction/exhaust unit, thereby requiring no labor of a user to maintain cleanliness. Because the dust box is in a substantially enclosed structure to collect dust, no dust is scattered to the surroundings or suspended mid-air so as to maintain cleanliness in the indoor unit main body. When discharging dust in the dust box outdoors, outside air is sucked through the air introduction port communicating with an end of the dust receiving portion and discharged from the suction/exhaust unit communicating with the other end, thereby the dust may be moved smoothly and discharged securely.

### Industrial Applicability

The present invention provides an air conditioner which includes means for automatically removing dust from an air filter so as to reduce labor and time, and the removed dust can be discharged outdoors by the suction/exhaust unit and further, discharge thereof outdoors by the suction/exhaust unit can be executed effectively, so as to achieve a reduction in the dust removal time.

## Claims

1. An air conditioner provided with an air filter which captures dust from air sucked from a suction port, **characterized by** comprising:
a moving mechanism which moves the air filter;
a dust box including a dust removing mechanism which makes contact with the moving air filter so as to remove dust adhering to the air filter, a dust receiving portion which is provided adjacent to the dust removing mechanism so as to collect the removed dust, and an opening portion which exposes the dust removing mechanism to a moving portion of the air filter;
a sealing member which closes the opening portion of the dust box after a dust removing operation on the air filter is ended; and
a suction/exhaust unit which is connected to the dust receiving portion of the dust box so as to discharge dust collected in the dust receiving portion.

2. The air conditioner according to claim 1, **characterized in that** the sealing member is formed of an elastic material and disposed to oppose the opening portion of the dust box and the opening portion is openable.

3. The air conditioner according to claim 1, **characterized in that** the dust receiving portion provided on the dust box communicates with the exterior of the dust box through an air introduction port an end portion of which is provided in the dust box while the other end thereof communicates with the suction/exhaust unit.
